# EUROPEAN PATENT APPLICATION

(11) **EP 2 482 283 A1**
(43) Date of publication of application: **01.08.2012**
(21) Application number: 11152429.4
(22) Date of filing: 27.01.2011
(51) Int. Cl.: G11B 27/10, G11B 27/34, G06F 3/048

(54) **Virtual hold baskets of media objects**

(71) Applicant: Research In Motion Limited, Waterloo, ON N2L 3W8 (CA)
(72) Inventor: Kramer, Kem-Laurin, Waterloo Ontario N2L 3L3 (CA); Langlois, Michael George, Kanata Ontario K2K 3K2 (CA)
(74) Representative: Hibbert, Juliet Jane Grace

(57) **Abstract**

An apparatus, and an associated method, facilitates manipulation of multi-media files by "marking" files as being in a "hold" state. Object files in a hold state are processed the same way and enable play lists to be created using icons displayed on a screen.

## Description

The present disclosure relates to a manner by which to facilitate manipulation of media objects stored in and played back on a wireless device. More particularly, the present disclosure relates to an apparatus and an associated method by which audio files, video files and other so-called multi-media files or multi-media "objects" can be organized on a wireless communications device.

### Background

Recent years have witnessed the development and deployment of a wide range of electronic devices and systems that provide many new and previously-unavailable functions and services. Advancements in communication technologies, for instance, have permitted the development and deployment of a wide array of communication devices, equipment, and communication infrastructures. There development, deployment, and popular use have, in significant aspects, changed the lives and daily habits of many.

Cellular and other analogous wireless communication systems have been developed and deployed and have achieved significant levels of usage. Increasing technological capabilities along with decreasing equipment and operational costs have permitted, by way of such wireless communication systems, increased communication capabilities to be provided at lowered costs.

Early wireless communication systems generally provided for voice communications and limited data communications. Successor-generation communication systems have provided increasingly data-intensive communication capabilities and services. New-generation communication systems provide for the communication of large data files at high through-put rates. Data files that are routinely carried over communication systems include so-called multi-media files having formats that include JPEG, MPEG, MP3 and derivatives thereof.

In a cellular communication system, as well as an analogous communication system, the communications are typically effectuated through use of portable wireless devices, which are sometimes referred to as mobile stations. The wireless devices are typically of small dimensions, thereby to increase the likelihood that the device shall be hand-carried and available for use whenever needed as long as the wireless devices positioned within an area encompassed by a network of the cellular, or analogous, communication system.

A wireless device includes transceiver circuitry to provide for radio communication, both to receive information and to send information. Wireless devices sometimes are provided with additional functionality. The additional functionality provided to a wireless device sometimes is communication related and other times, is related to other technologies, for instance, processing technologies. When so-configured, the wireless device forms a multi-functional device, having multiple functionalities.

Portable communications devices that are usable with wireless communication systems now provide the ability to play back multi-media files, the play back including the rendering of images, video and audio, all for the use and enjoyment of the device operator.

Multi-media functionality provided to a wireless device typically includes the ability to download (receive) multi-media objects or files, which include both audio files like MP3s and video files, such as MPEGs. Various methodologies have been developed by which to facilitate the playback of multi-media objects.

### Brief Description of the Drawings

FIG. 1 illustrates a functional block diagram of a communication system having a wireless device and which includes an implementation of the present disclosure therein;

FIG. 2 illustrates an exemplary table of addresses where multi-media object files can be found in a memory and which table includes a hold status field, the contents of which indicate whether the multi-media object is in a hold state; and

FIG. 3 is flow chart depicting a method of practicing the manipulation of media objects.

### Detailed Description

The present disclosure provides an apparatus, and an associated methodology, by which to manipulate multi-media files in a portable wireless communications device that is configured to play back such files. The apparatus and methodology disclosed herein can also be extended to specialized multi-media object play back devices such as MP3 players and portable DVD (digital video disk) players.

As used herein, the term "multi-media object" refers to a multi-media file. Multi-media files are considered herein to include JPEG files, MP3 files, MPEG files and derivatives thereof. Such files can be stored in a computer memory device and processed by a computer or other processor to render an image, audio, video and audio+ video. A multi-media object is therefore a multi-media file.

Through operation of an implementation of the present disclosure, a manner is provided by which to mark or identify multi-media objects as being in a "hold" state or classification. Multi-media objects so designated can be processed together as a set or group. The multi-media objects can also be organized, e.g., by title, author, publisher, creation date, genre, etc., as a group.

In one aspect of the present disclosure, one or more multi-media objects that are embodied as music files and which are designated as being in "hold" state, comprise a set of objects which can be labeled or otherwise identified. The members of the set are therefore considered to comprise a "play list."

Multiple play lists can be formed. The contents of playlists are not mutually exclusive, which is to say, a multi-media object can belong to more than one play list.

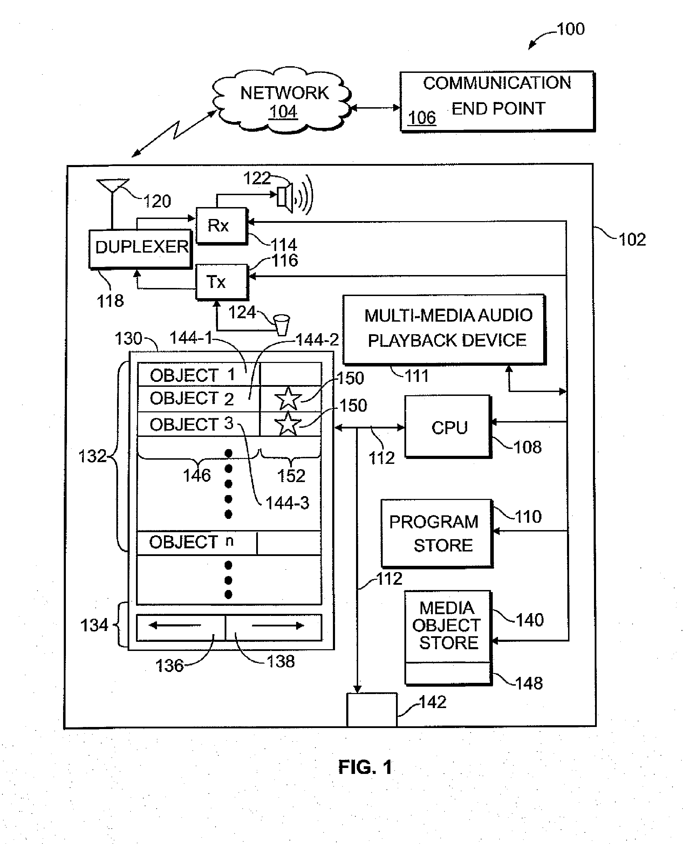

FIG. 1 is a block diagram of wireless communications systems 100. The communications system 100 is comprised of a multi-media capable wireless communications device 102 operatively coupled to a communications network 104. The communications' network 104 links or couples the multi-media capable wireless communications device 102 to a communications endpoint 106.

The communications endpoint 106 is typically embodied as a network such as the Internet, the public land mobile network or PLMN. The network 104 is a wireless communications network that is capable of sending and receiving messages to and from the communication endpoint 106 as well as communications device 102. In one implementation, the communications end point 106 includes storage for multi-media objects. The multi-media objects are transferred into the device 102 via the network 104. The device 102 is configured to store multi-media objects that it receives via the network 104 in a memory device or in a range of memory locations that are within one or more memory devices within the communications device 102.

The multi-media capable wireless communications device 102, hereinafter referred to as the communications device 102, is comprised of a central processing unit or computer 108, which executes program instructions stored in a memory device 110 accessible to the CPU 108 via an address and control bus 112. The processor or CPU 108 reads program instructions from the program store memory 110 that cause the CPU 108 to perform various functions. The program store memory device 110 also stores data required by the instructions executed by the CPU 108.

At least one of the functions performed by the CPU 108 is the play back of multi-media objects. Playback of multi-media objects is considered to be the rendering of visible images on a display device, such as a display panel 130, the presentation of video on a display device as well as the generation of audio signals such as music from a multi-media audio playback device 111.

Another function of the CPU 108 is the control of radio frequency communication circuitry by which the communications device 102 provides two-way voice and data communications capability. Radio frequency circuitry that performs such functions are well known to those of ordinary skill in the electronics art.

FIG. 1 shows that the CPU 108 is also coupled to a radio frequency receiver 114 and a radio frequency transmitter 116 via the bus 112. The radio frequency receiver 114 and the transmitter 116 are both connected to an antenna 120 via a duplexer 118.

The receiver demodulates radio frequency signals to produce audio signals. Audio signals from the receiver 114 are produced by a speaker 122. Audio frequency signals to be converted into radio frequency energy for transmissions are received by the transmitter 116 at a microphone 124.

The communications device 102 is controlled through a user interface panel 130. In one implementation, the user interface panel 130 is embodied as a liquid crystal display panel having the ability to display images but to also receive tactile input. In a first implementation, the user interface panel 130 has a first region 132 that is capable of displaying images and which is also responsive to tactile inputs. A second input region 134 provides controls, embodied as either soft keys or tactile-feedback switches 136 and 138 by which the communications device 102 can be controlled.

As shown in FIG. 1, the user interface panel 130 is operatively coupled to the CPU via the same bus 112. The CPU 108 is also coupled to a media object store 140.

As noted above, the communications device 102 depicted in FIG. 1 is a multi-media capable device because it is capable of receiving files, which when properly processed, render images on the first region 132, or audible signals played back through a multi-media audio playback device 111.

In a first implementation, the communications device 102 is capable of receiving multi-media objects via the network 104, or by of a direct connection, such as a USB port 142 that is also coupled to the CPU 108 via the bus 112. Multi-media objects are preferably stored in a separate memory device 140. In an alternate implementation, multi-media objects can also be stored in a range of memory within the program store memory 110. Memory that is used to store multi-media files (objects) is referred to herein as media object store 140.

Once a media object 148 is stored in a media object store memory 140, it can "played back" by a device user "selecting" an icon display on the display device 130 that identifies the multi-media object 148 in memory 140. A multi-media object in the multi-media object store 140 is selected by a user touching an icon 144 displayed on the first region 132 of the user interface panel 130. In FIG. 1, touching one of the icons 144-1 through 144-3 and which are displayed in tactile-sensitive regions 146 of the panel 130, causes the user interface panel 130 to generate a multi-media object selection signal that is sent to the CPU 108 from the panel 130 via the data bus 112.

Program instructions resident in the program store 110 cause the CPU 108 to read the multi-media object selection signals from the user interface panel 130. The CPU 108 and its associated program instructions and the bus 112 effectively function as a media object selection signal receiver in the sense that the CPU 108 receives signals that represent the selection of a media object at the user interface panel 130. The signal generated by the user interface panel 130 by actuation of a tactile sensitive region 146, generates a signal that is representative of the selection of a first type of icon 144 that is displayed in the tactile sensitive region 146. First-type icons 144 in the tactile sensitive region 146 are different from each other because each of the icons represents a corresponding media object 148 stored in the media object storage memory 140. A picture of a CD album cover or the cover of a DVD are examples of first-type icons 144 that can be displayed and which intuitively identifies a corresponding multi-media object, i.e., one of the aforementioned multi-media file types.

When the CPU 108 receives a signal from the user interface panel 130 that indicates the selection of an icon 144, the CPU 108 executes instructions, resident in the program store memory 110, which cause the CPU 108 to send a signal to the user interface panel 130, which causes the display of a second icon 150 in a second area 152 wherein the second types of icons 150 are displayed.

The selection of a media object 148 resident in the media object memory 140 by actuation of a first type icon 144, displayed on the user interface panel 130 "marks" the media object 148 as being placed in a special "hold" status. The hold status of a media object is a precursor to, and facilitates subsequent processing of the media object 148 as a member of a class or group of other objects in a hold state. Media objects 148 in a "hold" status are effectively assigned an attribute. Other files with the same attribute can be processed collectively as a group by the CPU 108. An example of processing files on hold is to treat the files as members of a "play list."

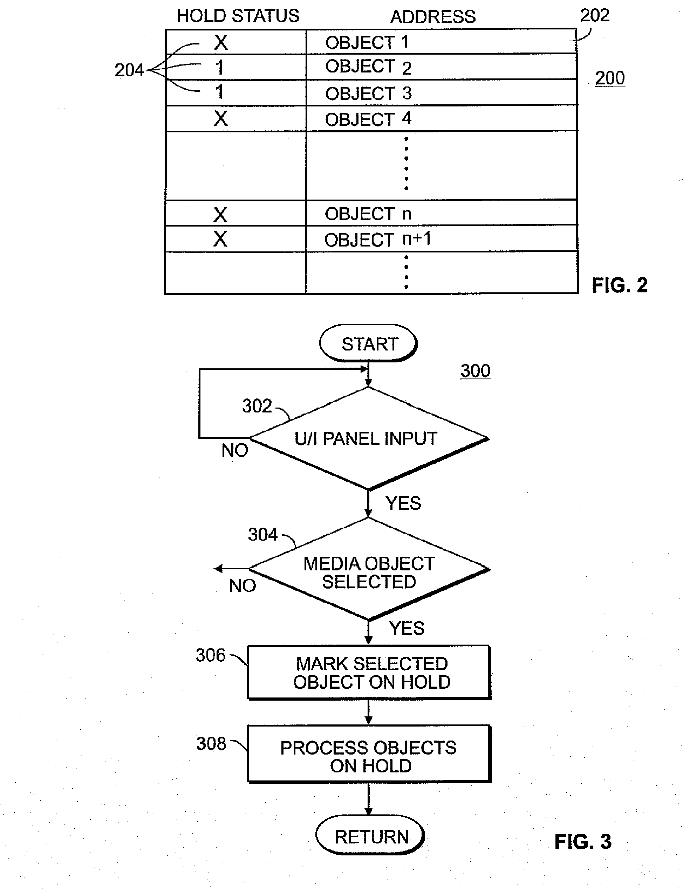

FIG. 2 is a block diagram of a table 200 used in one implementation. The table 200 is comprised of several, horizontal rows. Each horizontal row has two fields. The field on the right-hand side of each row is an address field 202. The address 202 stores a vector or a pointer into the media object store memory 140 where a media object 148 can be found. To the left of the address field 202 is a hold status field 204. Its contents or value indicate whether the media object pointed to by the address in the adjacent address field 202 has a hold status that is true or false, i.e., on or off.

In FIG. 1, "objects" 2 and 3 displayed on the panel 130 are marked as being in a hold status by the display of a second-type icon 150 in an adjacent and corresponding second type icon display area 152. The second type icons 150 indicate that the corresponding objects were selected by activation of the first-type icons 144 in the tactile sensitive regions 146. The selection of those icons 144 in the tactile sensitive regions 146 causes the CPU 108 to mark the hold status fields 204 for those objects 2 and 3 as shown in FIG. 2.

The content of a hold status field 204 is a hold status indicator. The hold status indicators are processed by the CPU 108 in such a way that the corresponding objects 148 resident in memory 140 are treated the same, i.e., as objects of a set. Stated another way, media objects whose status has been specified "hold" comprise a set of such objects which are processed together.

In a preferred implementation, media objects 148 in a hold status are grouped together and the elements of the corresponding set can be organized or sequenced for playback in a user-specified manner. By way of example, audio files that have been marked as on hold can be played-back in a user-specified order much like a playlist on various prior art MP3 play-back devices.

Referring again to FIG. 1, the control switches 136 and 138, which can be soft keys or tactile-feedback switches allow the user of the communications device 102 to "move" selected media objects 148 into a virtual bin or hold "area" by actuation of one or both of the switches 136 and 138. Operations that are possible by program instructions in the program store memory 110 include block moves, deletes, playback, upload or copying to an external device.

Those of ordinary skill in the art will recognize that the structures described above and the program instructions in the program store memory 110 provide an apparatus for multi-media capable wireless communications device that provides a virtual hold "basket" of media objects of various types. In a preferred implementation, the apparatus is comprised of at least the user interface panel 130, the processor 108, and the memory 110 as described above. In an alternate implementation, a separate media object selection signal receiver could be embodied as a digital signal processor, field programmable gate array, programmable logic array or discrete combination devices. While the preferred implementation shows the media object status using an indicator 150 displayed on the panel 130, in an alternate implementation, the contents of the hold status field 204 could also be considered a media object status indicator in that the contents of that field are responsive to the tactile actuation of the first-type icon on the display panel 130. The contents of the hold status field 204 also provide an indication of the selection of a media object.

In a first implementation, media objects are stored on the communications device 102. In an alternate implementation however media objects can be stored in the communications endpoint 106 and or the network 104.

In a first implementation, the first-type icons are graphic images, such as images of album covers or CD covers. A second-type icons are a designed choice, examples of which include illuminated areas or other graphical symbols.

FIG. 3 is a block diagram of a method 300 for processing multi-media objects 148 in a multi-media capable wireless communications device 102. A step 302, the processor 108 scans the user interface panel 130 for actuation or selection of a first-type icon on the display device 130. When a user interface panel actuation is detected, program flow proceeds to step 304 where the processor 108 decides whether a media object icon was selected or if some other user input was received. If a media object icon was selected, program control proceeds to step 306 wherein the selected object is marked by actuation of a second icon 150 in a second-type icon display area 152. Just prior to activating the display icon 150, simultaneously or shortly thereafter, the processor 108 sets a status bit in the hold status field 204 of the table 200. After a media object is marked as having been selected in step 306 object 148 that have been marked as on hold as described above are processed as described above in step 308. After the objects on hold have been processed, program controller turns and waits for subsequent actuation of a user interface panel at step 302.

An important characteristic of the apparatus and methodology disclosed herein is that when an object is in a hold state, the object's hold status does not interrupt or inhibit other activity like a song playing in a background. Songs, videos or pictures being played or displayed continue to do so.

The foregoing description is for purposes of illustration only. The true scope of the disclosure is set forth in the appurtenant claims.

## Claims

1. An apparatus for a multi-media capable wireless communications device, said apparatus comprising:
a user interface panel configured to selectively display first and second types of icons, displayed first-type icons being touch sensitive and representing media objects, displayed second-type icons providing indication of the selection of a media object, the selection of the media object being made by actuation of a first type icon for the media object;
a media object selection signal receiver coupled to the display device and configured to receive from the user interface panel, a signal representative of the selection of a media object by the tactile actuation of a first type icon representing the media object; and
a media object status indicator responsive to the tactile actuation of a first type icon for a media object and providing an indication of the selection a media object.

2. The apparatus of claim 1, wherein media objects are stored within the multi-media capable wireless communications device.

3. The apparatus of claim 1, wherein media objects are stored on a network.

4. The apparatus of claim 1, wherein the media object status indicator is configured to indicate selection of a media object by the display of a second type icon for the selected media object, on the user interface.

5. The apparatus of claim 4, further comprising a media object status manager coupled to at least one of the display and the media object selection signal receiver and which is configured to manage a plurality of media object status indicators.

6. The apparatus of claim 5, wherein the media object status manager is configured to group media object status indicators into a class, the media objects status indicators in the class determining how the wireless communications device processes media objects whose status indicators are in the class.

7. The apparatus of claim 1, wherein the first type icon is an image representing a multimedia file.

8. The apparatus of claim 1, wherein the media object is comprised of an audio file.

9. The apparatus of claim 1, wherein the second type icon indicates hold status of a selected media object.

10. The apparatus of claim 9, wherein the hold status of the selected media object is initiated by actuation of the first type icon.

11. A method of processing multi-media objects in a multi-media capable wireless communications device, the method comprising:
detecting selection of a first icon on a display device, the first icon representing a multi-media object stored in the communications device, the selection of the first icon designating the multi-media object represented by the first icon for selective processing by the communications device;
displaying on the display device, a second icon that indicates that the selected multi-media object has been selected for selective processing;
selectively processing multi-media objects that have been selected for selective processing.

12. The method of claim 11, wherein multi-media objects are comprised of audio files and wherein the selective processing of multi-media objects is comprised of organizing the audio files according to a user-specified sequence.

13. The method of claim 11, wherein multi-media objects are comprised of audio files and wherein the selective processing of multi-media objects is comprised of grouping multi-media objects in a set.

14. The method of claim 13, further comprising: grouping a plurality of multi-media objects into a plurality of sets.

15. The method of claim 14, wherein objects in a first set are processed differently from objects in a second set.

## Amended claims

### Amended claims in accordance with Rule 137(2) EPC.

**1.** An apparatus for a multi-media capable wireless communications device, said apparatus comprising:
a user interface panel (130) configured to selectively display information that, inter alia, intuitively identifies a corresponding stored multi-media object, said user interface panel divided into at least a first region (132) and a second region (134), said first region further subdivided into a first display area (146) and a second display area (152) and said second region providing a control input interface, said identifying displayed information comprising a first-type icon of an image associated uniquely with said multi-media object and displayed in said first area, said displayed first-type icons being touch sensitive, said user interface panel further configured to display a second-type icon in said second display area in said first region to provide an indication of the selection of a media object, the selection of the media object being made by touch actuation of said first type icon for the media object;
a media object selection signal receiver (108, 112) coupled to the user interface panel and configured to receive from the user interface panel, a signal representative of the selection of a media object by the tactile actuation of a first-type icon representing the media object.

**2.** The apparatus of claim 1, wherein media objects are stored within the multi-media capable wireless communications device.

**3.** The apparatus of claim 1, wherein media objects are stored on a network.

**4.** The apparatus of claim 1, wherein the media object status indicator is configured to indicate selection of a media object by the display of a second type icon for the selected media object, on the user interface.

**5.** The apparatus of claim 4, further comprising a media object status manager coupled to at least one of the display and the media object selection signal receiver and which is configured to manage a plurality of media object status indicators.

**6.** The apparatus of claim 5, wherein the media object status manager is configured to group media object status indicators into a class, the media objects status indicators in the class determining how the wireless communications device processes media objects whose status indicators are in the class.

**7.** The apparatus of claim 1, wherein the media object is comprised of an audio file.

**8.** The apparatus of claim 1, wherein the second type icon indicates hold status of a selected media object.

**9.** The apparatus of claim 8, wherein the hold status of the selected media object is initiated by actuation of the first type icon.

**10.** A method of processing multi-media objects in a multi-media capable wireless communications device, the method comprising:
displaying information that, inter alia, intuitively identifies a corresponding stored multi-media object on a user interface panel (130) divided into at least a first region (132) and a second region (134), said first region further subdivided into a first display area (146) and a second display area (152) and said second region providing a control input interface, said multi-media object identifying displayed information comprising a first icon of an image associated uniquely with said multi-media object;
detecting (304) selection of said first icon in said first display area of said first region the selection of the first icon designating the multi-media object represented by the first icon for selective processing by the communications device;
displaying on the display device, a second icon in said second display area in said first region that indicates that the selected multi-media object has been selected for selective processing; and
selectively processing (308) multi-media objects that have been selected for selective processing.

**11.** The method of claim 10, wherein multi-media objects are comprised of audio files and wherein the selective processing of multi-media objects is comprised of organizing the audio files according to a user-specified sequence.

**12.** The method of claim 10, wherein multi-media objects are comprised of audio files and wherein the selective processing of multi-media objects is comprised of grouping multi-media objects in a set.

**13.** The method of claim 12, further comprising: grouping a plurality of multi-media objects into a plurality of sets.

**14.** The method of claim 13, wherein objects in a first set are processed differently from objects in a second set.
